# EUROPEAN PATENT APPLICATION

(11) **EP 4 611 059 A1**
(43) Date of publication of application: **03.09.2025**
(21) Application number: 23883024.4
(22) Date of filing: 23.10.2023
(51) Int. Cl.: H01M 4/36, H01M 4/525, H01M 4/505, H01M 4/131, H01M 10/052, H01M 4/02

(54) **POSITIVE ELECTRODE ACTIVE MATERIAL AND LITHIUM SECONDARY BATTERY COMPRISING SAME**

(30) Priority: 24.10.2022 KR 20220137118; 19.10.2023 KR 20230140064
(71) Applicant: ECOPRO BM CO., LTD., Cheongju-si, Chungcheongbuk-do 28116 (KR)
(72) Inventor: SON, Yu Jin, Chungcheongbuk-do 28116 (KR); PARK, Jung Bae, Chungcheongbuk-do 28116 (KR); YU, Hyun Jong, Chungcheongbuk-do 28116 (KR); MOON, Chae Won, Chungcheongbuk-do 28116 (KR); LEE, Dong Geun, Chungcheongbuk-do 28116 (KR)
(74) Representative: Vossius & Partner Patentanwälte Rechtsanwälte mbB
(86) International application number: PCT/KR2023/016441
(87) International publication number: WO 2024/090918

(57) **Abstract**

The present invention relates to a positive electrode active material and a lithium secondary battery including the same, and more particularly, to a positive electrode active material capable of preventing and/or mitigating the degradation of electrochemical properties and lifetime of the positive electrode active material caused by lithium impurities and/or a washing process by removing lithium impurities through surface modification without a washing process for reducing the content of lithium impurities such as LiOH and Li₂CO₃ remaining on the surface of the positive electrode active material, and a lithium secondary battery using a positive electrode including the positive electrode active material.

## Description

### [Technical Field]

The present invention relates to a positive electrode active material and a lithium secondary battery including the same, and more particularly, to a positive electrode active material capable of preventing and/or mitigating the degradation of electrochemical properties and lifetime of the positive electrode active material caused by lithium impurities and/or a washing process by removing lithium impurities through surface modification without a washing process for reducing the content of lithium impurities such as LiOH and Li₂CO₃ remaining on the surface of the positive electrode active material, and a lithium secondary battery using a positive electrode including the positive electrode active material.

### [Background Art]

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium composite oxide is used as a positive electrode active material for a lithium secondary battery, and as an example, composite oxides such as LiCoO₂, LiMn2O₄, LiNiO₂, LiMnO₂, and the like are being studied.

Among the positive electrode active materials, LiCoO₂ is the most widely used due to its excellent lifetime characteristics and charge/discharge efficiency, but it has limitations in price competitiveness because cobalt, which is used as a raw material, is expensive due to resource constraints.

Lithium manganese oxides such as LiMnO₂ and LiMn₂O₄ have advantages of excellent thermal safety and low price, but also have problems of low capacity and poor high-temperature characteristics. In addition, a LiNiO₂-based positive electrode active material exhibits battery characteristics such as high discharge capacity, but it is difficult to synthesize the LiNiO₂-based positive electrode active material due to cation mixing between Li and transition metals, thereby causing significant problems in rate characteristics.

Therefore, in order to improve the low rate and cycle characteristics of LiNiO₂ while maintaining its high reversible capacity, ternary lithium composite oxides such as the so-called NCM (Ni-Co-Mn) and NCA (Ni-Co-Al), in which part of the nickel is substituted with cobalt, manganese, and/or aluminum, or quaternary lithium composite oxides such as NCMA (Ni-Co-Mn-Al) have been developed. Since the reversible capacity is reduced as the nickel content in the ternary or quaternary lithium composite oxide decreases, research has been widely conducted to increase the nickel content in the lithium composite oxide.

However, as the content of nickel in the lithium composite oxide increases, cation mixing increases in the crystal structure, thereby reducing stability or increasing the content of unreacted lithium impurities such as LiOH and Li₂CO₃ on the surface.

As the content of lithium impurities remaining on the surface of the lithium composite oxide increases, gas generation and swelling may be promoted in a lithium secondary battery using the lithium composite oxide as a positive electrode active material. As the content of lithium impurities remaining on the surface of the lithium composite oxide increases, a paste composition becomes gel-like due to lithium impurities when a paste for forming a positive electrode active material layer is prepared using the lithium composite oxide.

Accordingly, a washing process needs to be performed in the manufacturing process of the positive electrode active material to remove lithium impurities remaining on the surface of the lithium composite oxide. However, as the surface of the lithium composite oxide is damaged through this washing process, the electrochemical properties and stability of the lithium secondary battery using the lithium composite oxide as a positive electrode active material are degraded, and in particular, the problem of premature degradation of lifetime may occur.

In order to solve the above-described problem of lithium impurities, a method has been proposed in which a coating layer is formed after a washing process for the lithium composite oxide to cover the surface defects of the lithium composite oxide with the coating layer. In this case, it has been pointed out that it may be difficult to exhibit sufficient electrochemical properties because the surface resistance of the lithium composite oxide is changed. Furthermore, after the washing process, there is not enough residual lithium capable of reacting with the coating raw material, making it difficult to form a uniform coating layer. Therefore, it is difficult to sufficiently mitigate the lifetime degradation due to the surface damage of the lithium composite oxide caused by the washing process.

In addition, a method has been proposed in which, instead of performing a washing process on the lithium composite oxide, a coating layer is formed by reacting lithium impurities with a coating raw material including metal elements. However, this method also has a problem in that the surface resistance of the lithium composite oxide is changed, resulting in the degradation of electrochemical properties such as a decrease in the charge/discharge capacity of the lithium secondary battery using the lithium composite oxide as a positive electrode active material.

### [Disclosure]

### [Technical Problem]

One object of the present invention is to provide a positive electrode active material capable of preventing and/or mitigating the degradation of electrochemical properties and stability of the positive electrode active material caused by lithium impurities by effectively controlling the content of lithium impurities on the surface of the positive electrode active material (lithium composite oxide) without a washing process.

Another object of the present invention is to provide a positive electrode active material in which a fluorine-containing coating layer is formed by reacting lithium impurities present on the surface of the positive electrode active material (lithium composite oxide) with a fluorine-containing raw material, while reducing the change in electrochemical properties of the lithium composite oxide caused by the fluorine-containing coating layer by controlling the content of elements other than fluorine in the coating layer.

Still another object of the present invention is to provide a lithium secondary battery using the positive electrode active material defined herein.

The objects of the present invention are not limited to those described above, and other objects and advantages of the present invention not mentioned may be understood by the following description and will become more clearer from the embodiments of the present invention. In addition, it will be apparent that the objects and advantages of the present invention can be achieved by the means set forth in the claims and combination thereof.

### [Technical Solution]

According to one aspect of the present invention for solving the above-described problems, there is provided a positive electrode active material which includes a core portion including a lithium composite oxide capable of reversible intercalation/deintercalation of lithium ions; and a shell portion present on at least a portion of the surface of the core portion and including fluorine.

In an embodiment, the lithium composite oxide includes at least one transition metal selected from nickel, cobalt, manganese, and aluminum. Preferably, the lithium composite oxide is a lithium nickel-based composite oxide including nickel. In addition, the lithium nickel-based composite oxide may further include at least one selected from manganese and aluminum.

In an embodiment, the lithium composite oxide may be represented by Chemical Formula 1 below.

[Chemical Formula 1] LiₐNi_{1-(b+c+d)}Co_{b}M1_{c}M2_{d}O₂₋ₑXₑ

where M1 is at least one selected from Mn and Al, M2 is at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu, M1 and M2 are not the same, X is at least one anionic element selected from F, P, S, Cl, and Br, and 0.5≤a≤1.5, 0≤b≤0.20, 0≤c≤0.30, 0≤d≤0.10, and 0≤e≤0.10.

In another embodiment, the lithium composite oxide may be represented by Chemical Formula 2 below.

[Chemical Formula 2] Li_{a'}Ni_{1-(b'+d')}Mn_{b'}M2_{d'}O_{2-e'}X_{e'}

where M2 is at least one selected from Na, K, Mg, Ca, Ba, B, Ce, Hf, Ta, Cr, F, Al, V, Ti, Fe, Zr, Zn, Si, Y, Nb, Ga, Sn, Mo, W, P, Sr, Ge, Nd, Gd, and Cu, X is at least one anionic element selected from F, P, S, Cl, and Br, and 0.95≤a'≤₁.05, 0<b'≤0.5, 0≤d'≤0.10, and 0≤e'≤0.10.

In an embodiment, the lithium composite oxide is present as secondary particles in which a plurality of primary particles are aggregated, and the shell portion may be present on at least a portion of the surfaces of the primary particles and grain boundaries between adjacent primary particles.

According to another aspect of the present invention, there is provided a positive electrode including the above-described positive electrode active material.

According to still another aspect of the present invention, there is provided a lithium secondary battery including the above-described positive electrode.

### [Advantageous Effects]

According to the present invention, it is possible to prevent and/or mitigate the degradation of electrochemical properties and stability of the positive electrode active material caused by lithium impurities by forming a fluorine-containing coating layer through reacting lithium impurities present on the surface of the positive electrode active material (lithium composite oxide) with a fluorine-containing raw material, thereby effectively controlling the content of lithium impurities present on the surface of the positive electrode active material (lithium composite oxide) without a washing process.

In addition, according to the present invention, it is possible to reduce the change in electrochemical properties of the lithium composite oxide caused by the fluorine-containing coating layer by controlling the content of other heterogeneous elements (particularly carbon) and functional groups derived from heterogeneous elements other than fluorine in the fluorine-containing coating layer present on the surface of the positive electrode active material (lithium composite oxide).

In addition to the above-described effects, specific effects of the present invention are described while explaining specific details for the present invention below.

### [Modes of the Invention]

To better understand the present invention, certain terms are defined herein for convenience. Unless otherwise defined herein, scientific and technical terms used herein will have meanings generally understood by those of ordinary skill in the art. In addition, unless the context clearly indicates otherwise, it should be understood that a term in the singular form also includes its plural form, and a term in the plural form also includes its singular form.

### Positive electrode active material

A positive electrode active material according to one aspect of the present invention includes a core portion including a lithium composite oxide capable of reversible intercalation/deintercalation of lithium ions; and a shell portion which is present on at least a portion of the surface of the core portion and includes fluorine.

The lithium composite oxide is a composite metal oxide capable of intercalation/deintercalation of lithium ions, and has a layered crystal structure belonging to the R-3m space group. The lithium composite oxide with a layered crystal structure shows specific peaks in the 2θ region of 18.6±1° in the diffraction pattern obtained from XRD analysis.

When the lithium composite oxide included in the positive electrode active material defined herein is present as an aggregate of a plurality of primary particles, the lithium composite oxide may be referred to as a secondary particle.

Primary particles constituting the lithium composite oxide may have a rod shape, an elliptical shape, and/or an irregular shape. In addition, unless specifically intended during the manufacturing process, primary particles of various shapes may be present in the same positive electrode active material. In addition, the primary particle refers to a particle unit in which no grain boundary appears when observed at a magnification of 5,000 to 20,000x using a scanning electron microscope.

The primary particles constituting the lithium composite oxide defined herein may have an average particle size of 0.06 µm to 2 µm, preferably, 0.06 µm to 1.2 µm, and more preferably, 0.25 µm to 0.75µm. The average particle size of the primary particles may be the average value of the length in the major axis direction and the length in the minor axis direction of the primary particles ([major axis length + minor axis length]/2).

The primary particles may be composed of a single crystallite or a plurality of crystallites. The size of the crystallite may be estimated from the diffraction pattern obtained through XRD analysis of the lithium composite oxide or calculated by applying the full width at half maximum (FWHM) of the peak specific to the representative crystal plane to the Scherrer equation.

The size of crystallites present in the lithium composite oxide may preferably be 40 nm or more and 130 nm or less. In addition, the size of crystallites present in the lithium composite oxide may be 40 nm or more and 120 nm or less, 45 nm or more and 110 nm or less, or 48 nm or more and 100 nm or less.

When the crystallite size is less than 40 nm, the size of the crystallites constituting the primary particles is excessively small, and thus the particle strength of the lithium composite oxide may be reduced. In addition, as the size of primary particles is excessively reduced, the specific surface area increases, and thus gas generation may be promoted due to side reactions with an electrolyte. On the other hand, when the crystallite size is greater than 130 nm, the primary particles grow excessively, and thus the initial capacity and initial efficiency of a lithium secondary battery using the primary particles as a positive electrode active material may be reduced. In addition, when a fluorine-containing coating layer is formed on the surface of overgrown primary particles, the degradation of other electrochemical properties may be caused due to changes in surface resistance.

The average particle diameter of the secondary particles may be 0.5 µm to 15 µm, preferably 1.0 µm to 12 µm. The average particle diameter of the secondary particles may vary depending on the number of primary particles constituting the secondary particles. The average particle diameter (D50) of the secondary particles may be calculated using a laser diffraction method. For example, the average particle diameter (D50) may be determined by dispersing secondary particles in a dispersion medium, irradiating the same with ultrasonic waves of about 28 kHz at an output of 60 W using a commercially available laser diffraction particle size measurement device (such as Microtrac MT 3000), obtaining a volume cumulative particle size distribution graph, and obtaining the particle size corresponding to 50% of the volume cumulative amount.

Unless otherwise defined, the term "surface of the primary particle" used herein refers to the outermost surface of the primary particle exposed to the outside. Likewise, the term "surface of the secondary particle" used herein refers to the outermost surface of the secondary particle exposed to the outside. Here, the "surface of the secondary particle" formed by aggregation of a plurality of primary particles corresponds to the exposed surface of the primary particle present on the surface portion of the secondary particle.

In addition, unless otherwise defined, the term "surface portion of the particle" used herein refers to a region relatively close to the "outermost surface" of a particle, and the "central portion of the particle" refers to a region relatively close to the "center" of the particle compared to the "surface portion." Accordingly, the "surface portion of the primary particle" refers to a region relatively close to the "outermost surface" of the primary particle, and the "central portion of the primary particle" refers to a region relatively close to the "center" of the primary particle compared to the "surface portion." Likewise, the "surface portion of the secondary particle" refers to a region relatively close to the "outermost surface" of the secondary particle, and the "central portion of the secondary particle" refers to a region relatively close to the "center" of the secondary particle compared to the "surface portion."

Here, a region excluding the "surface portion of the particle" within any particle may be defined as the "central portion of a particle."

The lithium composite oxide includes lithium and at least one transition metal. The transition metal may be at least one selected from nickel, cobalt, manganese, and aluminum.

In an embodiment, the lithium composite oxide may be represented by Chemical Formula 1 below.

[Chemical Formula 1] LiₐNi_{1-(b+c+d)}Co_{b}M1_{c}M2_{d}O₂₋ₑXₑ

where M1 is at least one selected from Mn and Al, M2 is at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu, M1 and M2 are not the same, X is at least one anionic element selected from F, P, S, Cl, and Br, and 0.5≤a≤1.5, 0≤b≤0.20, 0≤c≤0.30, 0≤d≤0.10, and 0≤e≤0.10.

The ratio "a," which represents the proportion of lithium among all elements except lithium in the lithium composite oxide, may be 0.5 or more and 1.5 or less, 0.75 or more and 1.25 or less, 0.90 or more and 1.1 or less, or 0.95 or more and 1.05 or less.

The molar fraction of nickel among all elements except lithium in the lithium composite oxide may be 60% or more. In this case, b+c+d in Chemical Formula 1 is 0.40 or less. The molar fraction of nickel among all elements except lithium in the lithium composite oxide may be 70% or more, 75% or more, 80% or more, 85% or more, or 90% or more.

When the lithium composite oxide includes cobalt, the mole fraction of cobalt among all elements except lithium in the lithium composite oxide may be 20% or less, 15% or less, 10% or less, or 5% or less. When the lithium composite oxide includes cobalt, b in Chemical Formula 1 is greater than 0. When the lithium composite oxide is a cobalt-free lithium composite oxide that does not include cobalt, b in Chemical Formula 1 is 0.

When the lithium composite oxide includes manganese and/or aluminum, the mole fraction of manganese and/or aluminum among all elements except lithium in the lithium composite oxide may be 30% or less, 20% or less, 15% or less, 10% or less, or 5% or less. When the lithium composite oxide includes manganese and/or aluminum, c in Chemical Formula 1 is greater than 0.

In Chemical Formula 1, M2 refers to a dopant present in the secondary particles. The dopant may be present in a doped state in the crystal lattice of the primary particles. When the lithium composite oxide includes a dopant, M2 in Chemical Formula 1 is greater than 0. In addition, the molar fraction of the dopant among all elements except lithium in the lithium composite oxide may be 10% or less, 5% or less, 2% or less, or less than 2%.

As shown in Chemical Formula 1, at least a portion of the oxygen in the lithium composite oxide may be substituted with at least one anionic element selected from F, P, S, Cl, and Br, preferably F. In particular, F may be present more stably within the crystal structure of the lithium composite oxide than other anionic elements because F has a similar ionic radius to oxygen. In addition, F may partially replace oxygen forming M (metal)-O bonds to form strong M-F bonds, thereby contributing to strengthening the crystal structure of the lithium composite oxide.

In another embodiment, the lithium composite oxide may be represented by Chemical Formula 2 below.

[Chemical Formula 2] Li_{a'}Ni_{1-(b'+d')}Mn_{b'}M2_{d'}O_{2-e'}X_{e'}

where M2 is at least one selected from Na, K, Mg, Ca, Ba, B, Ce, Hf, Ta, Cr, F, Al, V, Ti, Fe, Zr, Zn, Si, Y, Nb, Ga, Sn, Mo, W, P, Sr, Ge, Nd, Gd, and Cu, X is at least one anionic element selected from F, P, S, Cl, and Br, and 0.95≤a'≤1.05, 0<b'≤0.5, 0≤d'≤0.10, and 0≤e'≤0.10.

In the lithium composite oxide represented by Chemical Formula 2, the molar fraction of nickel among the metal elements except lithium may be 0.60 to 0.95, preferably 0.70 to 0.90, and the molar fraction of manganese among the metal elements except lithium may be 0.05 to 0.40, preferably 0.10 to 0.40, and more preferably 0.10 to 0.30.

When the molar fraction of nickel in the lithium composite oxide is less than 0.60, the proportion of the spinel phase in the lithium composite oxide may increase. As the proportion of the spinel phase in the lithium composite oxide increases, a higher operating voltage is required, and the capacity characteristics of the lithium secondary battery using the lithium composite oxide with a high proportion of the spinel phase as a positive electrode active material may deteriorate. In addition, since the manganese content increases as the nickel content decreases in the lithium composite oxide, the overall degree of cation mixing within the lithium composite oxide may increase.

The charge of all transition metals constituting the lithium composite oxide preferably has a trivalent state to exhibit a stable charge neutrality state. At this time, when synthesizing a lithium composite oxide with a low cobalt content and a high manganese content, the content of Ni²⁺ increases, instead of Ni³⁺, in order to exhibit a charge-neutral state because Mn⁴⁺ becomes excessive during the synthesis reaction. Since Ni²⁺ (0.69Å), which is present in excess during the synthesis reaction, has a size similar to that of Li⁺ (0.76Å), it can occupy the 3a site of Li in the crystal structure of the lithium composite oxide, which is called cation mixing.

On the other hand, when an excessive amount of nickel is present in the lithium composite oxide, the lithium composite oxide exhibits LiNiO₂-like characteristics. LiNiO₂ not only has low thermal stability, but also has a problem in that when an internal short circuit occurs due to external pressure, etc. in a charged state, the lithium composite oxide itself decomposes or side reactions between the electrolyte and the interface and surface of the lithium composite oxide cause the rupture and ignition of the lithium secondary battery.

Meanwhile, when the mole fraction of manganese in the lithium composite oxide exceeds 0.40, the same problem as when the mole fraction of nickel is less than 0.60 may occur.

The positive electrode active material according to the present invention includes a shell portion present on at least a portion of the surface of a core portion including the above-defined lithium composite oxide. The shell portion includes fluorine, and more specifically, may include LiF as a fluorine-containing compound. LiF may be formed by the reaction of a fluorine-containing polymer and lithium impurities (such as LiOH and Li₂CO₃, etc.) present on the surface of the core portion.

The content of fluorine determined by IC analysis of the positive electrode active material is preferably 0.1 wt% to 0.5 wt%. When the fluorine content is less than 0.1 wt%, it is difficult to sufficiently remove lithium impurities present on the surface of the core portion, and ultimately, a washing process should be additionally performed to reduce the content of lithium impurities. On the other hand, when the content of fluorine exceeds 0.5 wt%, the amount of LiF present on the surface of the core portion excessively increases, and thus, the surface resistance or electrochemical properties of the positive electrode active material may be degraded.

As the lithium impurities present on the surface of the core portion react with the fluorine-containing polymer (such as PVDF, PTFE, etc.) to form LiF, the content of lithium impurities present on the surface of the core portion may be reduced even without a separate washing process for reducing the content of lithium impurities. Accordingly, it is possible to prevent and/or mitigate the degradation of the electrochemical properties and lifetime of the positive electrode active material caused by lithium impurities and/or the washing process.

When one particle including the core portion and the shell portion is defined as a core-shell particle, the volume occupied by the core portion and the shell portion in the core-shell particle may be calculated from the cross-section of the core-shell particle. For example, after obtaining a cross-sectional SEM image of the core-shell particle, the radius of the core portion and the radius of the shell portion are respectively measured, and then the volumes of the core portion and the shell portion may be calculated from their respective radii. In addition, the thickness of the shell portion in the core-shell particle may be 1 nm or more and 50 nm or less.

When the thickness of the shell portion is less than 1 nm, it is difficult to sufficiently remove the lithium impurities present on the surface of the core portion, and consequently, an additional washing process should be performed to reduce the content of lithium impurities. On the other hand, when the thickness of the shell portion exceeds 50 nm, the amount of LiF present on the surface of the core portion excessively increases, and thus, the surface resistance or electrochemical properties of the positive electrode active material may be degraded.

As the lithium composite oxide corresponding to the core portion is present as secondary particles in which a plurality of primary particles are aggregated, the shell portion may be present on at least a portion of the surfaces of the primary particles and grain boundaries between adjacent primary particles.

Accordingly, the shell portion is defined as a region where LiF is present on the surface of the primary particles and/or the secondary particles, and the shell portion may be formed entirely or partially (in an island form) on the surface of the primary particles and/or the secondary particles.

When the shell portion is present in the grain boundary between adjacent primary particles, it is preferable that the weight ratio (F/Ni) of fluorine to nickel present in the grain boundary is 0.02 to 0.05.

Fluorine may be present at a higher concentration on the surface of the secondary particles than in the inside of the secondary particles. In this case, fluorine may form a concentration gradient decreasing from the surface of the secondary particles toward the inside of the secondary particles along the interfaces between the primary particles.

Meanwhile, when lithium impurities present on the surface of the core portion react with fluorine-containing polymers to form LiF, fluorine-containing polymers or elements derived from fluorine-containing polymers (such as carbon) may remain in the positive electrode active material. When fluorine-containing polymers or elements derived from fluorine-containing polymers (especially functional groups derived from these elements) remain in the positive electrode active material, the surface resistance or electrochemical properties of the positive electrode active material may change unexpectedly.

Therefore, it is preferable that no peak is observed in the region of greater than 686 eV and less than 689 eV, and an F1s peak is observed in the region of 684 eV or more and 686 eV or less in XPS analysis of the positive electrode active material. The F1s peak observed in the region of 684 eV or more and 686 eV or less is a peak that appears due to the presence of LiF on the surface of the core portion. Meanwhile, when a peak appears in the region of greater than 686 eV and less than 689 eV, this peak indicates the presence of PVDF on the surface of the core portion. When PVDF is present on the surface of the core portion including the lithium composite oxide with the crystal structure defined herein, the surface resistance or electrochemical properties of the positive electrode active material may be degraded.

Additionally, I(F1s)/I(C1s) determined from XPS analysis of the positive electrode active material may be 1.0 or more and 2.5 or less, 1.1 or more and 2.3 or less, 1.2 or more and 2.0 or less, or 1.22 or more and 1.96 or less.

Here, I(F1s) refers to the intensity of the F1s peak observed in the region of 684 eV or more and 686 eV or less, and I(C1s) refers to the intensity of the C1s peak due to the C=O bonding observed in the region of 288 eV or more and 292 eV or less. The intensity of the C1s peak due to the C=O bonding may increase not only with carbon derived from fluorine-containing polymers and C=O functional groups derived from the carbon on the surface of the core portion, but also with an increasing amount of lithium impurities (Li₂CO₃) on the surface of the core portion.

Accordingly, an I(F1s)/I(C1s) ratio less than 1.0 indicates that carbon derived from fluorine-containing polymers, C=O functional groups derived from the carbon, and lithium impurities (Li₂CO₃) are all excessively present on the surface of the core portion.

As described above, when carbon derived from fluorine-containing polymers, C=O functional groups derived from the carbon, and lithium impurities (Li₂CO₃) are all excessively present on the surface of the core portion, the surface resistance and electrochemical properties, etc. of the positive electrode active material may be degraded. An I(F1s)/I(C1s) ratio greater than 2.5 indicates that LiF is excessively present on the surface of the core portion. In this case, the excessive amount of LiF may cause the surface resistance or electrochemical properties of the positive electrode active material to be degraded.

### Lithium secondary battery

According to another aspect of the present invention, there is provided a positive electrode including a positive electrode current collector and a positive electrode active material layer formed on the positive electrode current collector. The positive electrode active material layer may include the positive electrode active material according to various embodiments of the present invention. Since the positive electrode active material is the same as described above, for convenience, a detailed explanation will be omitted, and only the components that have not been described will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may generally have a thickness of 3 µm to 500 µm, and fine irregularities may be formed on the surface of the current collector, thereby increasing the adhesion of a positive electrode active material. For example, the positive electrode current collector may be used in various forms such as a film, a sheet, a foil, a net, a porous body, a foam, a non-woven fabric, etc.

The positive electrode active material layer may be prepared by coating the positive electrode current collector with a positive electrode slurry composition including the positive electrode active material, a conductive material, and optionally a binder.

The positive electrode active material may be included in an amount of 80 wt% to 99 wt%, specifically 85 wt% to 98.5 wt%, with respect to the total weight of the positive electrode active material layer. When the positive electrode active material is included in this content range, excellent capacity characteristics may be exhibited, but the present invention is not necessarily limited thereto.

The conductive material is used to impart conductivity to an electrode, and is not particularly limited as long as it has electron conductivity without causing a chemical change in a battery. Specific examples of the conductive material may include graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be included in an amount of 0.1 wt% to 15 wt% with respect to the total weight of the positive electrode active material layer.

The binder serves to improve the adhesion between particles of the positive electrode active material and the adhesion between the positive electrode active material and a current collector. Specific examples of the binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), a fluoroelastomer, or various copolymers thereof, and one or a mixture of two or more thereof may be used. The binder may be included in an amount of 0.1 wt% to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material, and the binder and then imparting a viscosity for exhibiting excellent thickness uniformity when the slurry is applied to manufacture a positive electrode.

In addition, in another embodiment, the positive electrode may be manufactured by casting the positive electrode slurry composition onto a separate support, and then laminating a film obtained by delamination from the support onto the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator, which is interposed between the positive electrode and the negative electrode, and an electrolyte. Since the positive electrode is the same as described above, detailed description of the positive electrode will be omitted for convenience, and other components which have not been described above will be described in detail below.

The lithium secondary battery may further optionally include a battery case accommodating an electrode assembly of the positive electrode, the negative electrode and the separator, and a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 µm to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, a foam, a non-woven fabric, etc.

The negative electrode active material layer may be formed by coating the negative electrode current collector with a negative electrode slurry composition including the negative electrode active material, a conductive material, and optionally a binder.

As the negative electrode active material, a compound capable of the reversible intercalation/deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. As the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% with respect to the total weight of the negative electrode active material layer.

The binder is a component that assists in the bonding between a conductive material, an active material, and a current collector, and may typically be added in an amount of 0.1 wt% to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber, nitrile-butadiene rubber, a fluoroelastomer, and various copolymers thereof.

The conductive material is a component for further improving the conductivity of the negative electrode active material, and may be added in an amount of 10 wt% or less, preferably, 5 wt% or less, with respect to the total weight of the negative electrode active material layer. The conductive material is not particularly limited as long as it does not cause a chemical change in the battery and has conductivity, and may be, for example, graphite such as natural graphite or artificial graphite; carbon black such as acetylene black, Ketjen black, channel black, furnace black, lamp black, or thermal black; a conductive fiber such as a carbon fiber or a metal fiber; a metal powder such as fluorinated carbon, aluminum, or nickel powder; a conductive whisker consisting of zinc oxide or potassium titanate; a conductive metal oxide such as titanium oxide; or a conductive material such as a polyphenylene derivative.

In an embodiment, the negative electrode active material layer may be prepared by coating the negative electrode current collector with a negative electrode slurry composition prepared by dissolving or dispersing a negative electrode active material, and optionally, a binder and a conductive material in a solvent, and then drying, or may be prepared by casting the negative electrode slurry composition on a separate support and then laminating a film delaminated from the support on the negative electrode current collector.

Meanwhile, in the lithium secondary battery, the separator separates the negative electrode and the positive electrode and provides a passage for lithium ions to move, and is not particularly limited as long as it is commonly used as a separator in lithium secondary batteries. In particular, it is preferable that the separator has low resistance to ion transfer of the electrolyte and excellent electrolyte impregnation ability. Specifically, a porous polymer film, such as a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure including two or more layers thereof may be used. In addition, a conventional porous non-woven fabric, such as a non-woven fabric made of high melting point glass fiber or polyethylene terephthalate fiber, may be used. In addition, a coated separator including a ceramic component or a polymer material may be used to ensure thermal resistance or mechanical strength, and may be optionally used in a single- or multi-layered structure.

In addition, the electrolyte used herein may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in manufacturing lithium secondary batteries, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C₂ to C₂₀ hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferred, and a mixture of a cyclic carbonate (such as ethylene carbonate or propylene carbonate), which has high ionic conductivity and a high dielectric constant that can improve the charging/discharging performance of the battery and a low-viscosity linear carbonate-based compound (such as ethyl methyl carbonate, dimethyl carbonate, or diethyl carbonate) is more preferred. In this case, it is preferable to use a mixture of cyclic carbonate and chain-type carbonate at a volume ratio of about 1:1 to about 1:9, which can result in excellent electrolyte performance.

The lithium salt is not particularly limited as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 M to 2.0 M. When the concentration of the lithium salt is within this range, the electrolyte has appropriate conductivity and viscosity, exhibiting excellent electrolyte performance, and thus lithium ions may move effectively.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte may be used.

As a material for the sulfide-based solid electrolyte, a solid electrolyte containing Li, an X element (where X is at least one selected from P, As, Sb, Si, Ge, Sn, B, Al, Ga, and In) and S may be used. Examples of the sulfide-based solid electrolyte material may include Li₂S-P₂S₅, Li₂S-P₂S-LiX (where X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, and Z is Ge, Zn, or Ga), Li₂S-GeS₂, Li₂S-SiS₂-Li₃PO₄, and Li₂S-SiS₂-LiₚMO_{q} (where p and q are integers, and M is P, Si, Ge, B, Al, Ga, or In).

The solid electrolyte, preferably, the sulfide-based solid electrolyte, may be amorphous, crystalline, or in a state in which an amorphous phase and crystalline phase are mixed.

Materials for the oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between the positive and negative electrodes. In addition, the solid electrolyte may be partially included in the positive electrode active material layer of the positive electrode independent of the solid electrolyte layer, or the solid electrolyte may be partially included in the negative electrode active material layer of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. The additive may be included in an amount of 0.1 wt% to 5 wt% with respect to the total weight of the electrolyte.

Since the lithium secondary battery including the positive electrode active material according to the present invention stably exhibits excellent discharge capacity, output characteristics, and lifetime characteristics, it is useful in portable devices such as mobile phones, laptop computers, and digital cameras and electric vehicles such as hybrid electric vehicles (HEVs).

The outer shape of the lithium secondary battery according to the present invention is not particularly limited, and may be a cylindrical, prismatic, pouch or coin shape using a can. In addition, the lithium secondary battery may be used not only in battery cells used as a power source of small devices, but also preferably used as a unit battery in medium and large-sized battery modules including a plurality of battery cells.

According to yet another aspect of the present invention, there is provided a battery module including the lithium secondary battery as a unit cell and/or a battery pack including the same.

The battery module or the battery pack may be used as a power source for any one or more of medium and large-sized devices such as a power tool; an electric vehicle including an electric vehicle (EV), a hybrid electric vehicle, and a plug-in hybrid electric vehicle (PHEV); and a power storage system.

Hereinafter, the present invention will be described in more detail through examples. However, these examples are only for the purpose of illustrating the present invention and should not be construed as limiting the scope of the present invention.

### Preparation Example 1. Preparation of positive electrode active material

### Comparative Example 1

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain a positive electrode active material.

### Comparative Example 2

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was heat-treated at 150 °C for 8 hours in an O₂ atmosphere to obtain a positive electrode active material.

### Comparative Example 3

A positive electrode active material was prepared in the same manner as in Comparative Example 2, except that the heat treatment temperature for the intermediate product was set to 300°C.

### Comparative Example 4

A positive electrode active material was prepared in the same manner as in Comparative Example 2, except that the heat treatment temperature for the intermediate product was set to 350 °C.

### Comparative Example 5

A positive electrode active material was prepared in the same manner as in Comparative Example 2, except that the heat treatment temperature for the intermediate product was set to 400 °C.

### Comparative Example 6

A positive electrode active material was prepared in the same manner as in Comparative Example 2, except that the heat treatment temperature for the intermediate product was set to 500 °C.

### Comparative Example 7

A positive electrode active material was prepared in the same manner as in Comparative Example 2, except that the heat treatment temperature for the intermediate product was set to 600 °C.

### Comparative Example 8

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was mixed with 0.1 wt% of PVDF and then heat-treated at 350 °C for 8 hours in an O₂ atmosphere to obtain a positive electrode active material.

### Comparative Example 9

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was mixed with 5.0 wt% of PVDF and then heat-treated at 350 °C for 8 hours in an O₂ atmosphere to obtain a positive electrode active material.

### Comparative Example 10

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was mixed with 0.35 wt% of PVDF and then heat-treated at 150 °C for 8 hours in an O₂ atmosphere to obtain a positive electrode active material.

### Comparative Example 11

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was mixed with 0.35 wt% of PVDF and then heat-treated at 300 °C for 8 hours in an O₂ atmosphere to obtain a positive electrode active material.

### Comparative Example 12

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 750 °C for 12 hours in an O₂ atmosphere to obtain an intermediate product.

Afterward, the intermediate product was mixed with 0.35 wt% of PVDF and then heat-treated at 400 °C for 8 hours in an O₂ atmosphere to obtain a positive electrode active material.

### Comparative Example 13

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 950 °C for 12 hours in an O₂ atmosphere to obtain an intermediate product.

Afterward, the intermediate product was mixed with 0.35 wt% of PVDF and then heat-treated at 400 °C for 8 hours in an O₂ atmosphere to obtain a positive electrode active material.

### Example 1

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was mixed with 0.35 wt% of PVDF and then heat-treated at 350 °C for 8 hours in an O₂ atmosphere to obtain a positive electrode active material.

### Example 2

A positive electrode active material was prepared in the same manner as in Example 1, except that the heat treatment temperature for the intermediate product was set to 400 °C.

### Example 3

A positive electrode active material was prepared in the same manner as in Example 1, except that the heat treatment temperature for the intermediate product was set to 500 °C.

### Example 4

A positive electrode active material was prepared in the same manner as in Example 1, except that the heat treatment temperature for the intermediate product was set to 600 °C.

### Example 5

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 850 °C for 12 hours in an O₂ atmosphere to obtain an intermediate product.

Afterward, the intermediate product was mixed with 0.5 wt% of PVDF and then heat-treated at 400 °C for 8 hours in an O₂ atmosphere to obtain a positive electrode active material.

### Example 6

A Ni_{0.75}Mn_{0.25}(OH)₂ hydroxide precursor was synthesized using a metal salt aqueous solution in which nickel sulfate and manganese sulfate were mixed at a molar ratio of 75:25 through a known co-precipitation method.

Subsequently, the hydroxide precursor was mixed with LiOH (Li/(metals except Li) molar ratio = 1.01), and then heat-treated at 800 °C for 12 hours in an O₂ atmosphere to obtain an intermediate product.

Afterward, the intermediate product was mixed with 0.35 wt% of PVDF and then heat-treated at 400 °C for 8 hours in an O₂ atmosphere to obtain a positive electrode active material.

### Preparation Example 2. Manufacture of lithium secondary battery (half-cell)

A positive electrode slurry was prepared by dispersing 94 wt% of each positive electrode active material prepared according to Preparation Example 1, 3 wt% of carbon black, and 3 wt% of PVDF binder in 30 g of N-methyl-2-pyrrolidone (NMP). The positive electrode slurry was uniformly applied onto a 15 µm-thick aluminum thin film and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 µm) as a separator, and an electrolyte in which LiPF₆ was dissolved at a concentration of 1.15 M in a mixed solvent of ethylene carbonate and ethyl methyl carbonate at a volume ratio of 3:7.

### Experimental Example 1. IC and XRD analysis of positive electrode active material

The content of F present in each positive electrode active material prepared according to Preparation Example 1 was measured through ion chromatography (IC) analysis using an IC instrument (ICS-6000 from Thermo Scientific Dionex).

In addition, X-ray diffraction (XRD) analysis was performed on each positive electrode active material prepared according to Preparation Example 1, and then the crystallite size of the lithium composite oxide included in the positive electrode active material was calculated by applying the obtained peak full width at half maximum to the Scherrer equation. XRD analysis was performed using a Bruker D8 Advance diffractometer with Cu-Kα radiation (1.540598Å).

The measurement results are shown in Table 1 below.

**[Table 1]**

| Classification | F content (wt%) | Crystallite size (nm) |
|---|---|---|
| Example 1 | 0.183 | 85 |
| Example 2 | 0.182 | 86 |
| Example 3 | 0.162 | 87 |
| Example 4 | 0.142 | 88 |
| Example 5 | 0.271 | 85 |
| Example 6 | 0.179 | 48 |
| Comparative Example 1 | 0 | 87 |
| Comparative Example 2 | 0 | 83 |
| Comparative Example 3 | 0 | 85 |
| Comparative Example 4 | 0 | 86 |
| Comparative Example 5 | 0 | 86 |
| Comparative Example 6 | 0 | 88 |
| Comparative Example 7 | 0 | 89 |
| Comparative Example 8 | 0.08 | 86 |
| Comparative Example 9 | 2.574 | 83 |
| Comparative Example 10 | 0 | 84 |
| Comparative Example 11 | 0.092 | 84 |
| Comparative Example 12 | 0.191 | 28 |
| Comparative Example 13 | 0.17 | 200 |

In the case of the positive electrode active material according to Comparative Example 10, it can be seen that most of the PVDF remained unreacted due to the excessively low heat treatment temperature after mixing the intermediate product with PVDF. Accordingly, as F doping and/or conversion of lithium impurities to LiF hardly occurred in the positive electrode active material, F was not detected in the IC analysis of the positive electrode active material according to Comparative Example 10.

In the case of the positive electrode active material according to Comparative Example 12, the heat treatment temperature (calcination temperature) of the hydroxide precursor was excessively low, resulting in insufficient crystal growth, and it was confirmed to have a crystallite size of about 28 nm. On the other hand, in the case of the positive electrode active material according to Comparative Example 13, the heat treatment temperature (calcination temperature) of the hydroxide precursor was excessively high, leading to excessive crystal growth, and it was confirmed to have a crystallite size of about 200 nm.

### Experimental Example 2. XPS analysis of positive electrode active material

XPS analysis was performed on each positive electrode active material prepared according to Preparation Example 1 to determine the composition of the surface (especially the shell portion) of the positive electrode active material. The XPS analysis was performed using a K-alpha^{™} Thermo U.K. spectrometer (acceleration voltage: 100 eV to 3 keV, energy resolution: 050 eV).

Specifically, through the XPS analysis, it was determined whether there was a peak specific to PVDF in the region of greater than 686 eV and less than 689 eV, and whether there was an F1s peak in the region of 684 eV or more and 686 eV or less. Additionally, the ratio I(F1s)/I(C1s) was calculated, where I(F1s) is the intensity of the F1s peak observed in the region of 684 eV or more and 686 eV or less, and I(C1s) is the intensity of the C1s peak due to C=O bonding observed in the region of 288 eV or more and 292 eV or less.

The XPS analysis results are shown in Table 2 below.

**[Table 2]**

| Classification | Presence of peak corresponding to PVDF | Presence of F1s peak | I(F1s)/I(C1s) |
|---|---|---|---|
| Example 1 | X | O | 1.79 |
| Example 2 | X | O | 1.82 |
| Example 3 | X | O | 1.61 |
| Example 4 | X | O | 1.22 |
| Example 5 | X | O | 1.96 |
| Example 6 | X | O | 1.9 |
| Comparative Example 1 | X | X | 0 |
| Comparative Example 2 | X | X | 0 |
| Comparative Example 3 | X | X | 0 |
| Comparative Example 4 | X | X | 0 |
| Comparative Example 5 | X | X | 0 |
| Comparative Example 6 | X | X | 0 |
| Comparative Example 7 | X | X | 0 |
| Comparative Example 8 | X | O | 0 |
| Comparative Example 9 | O | O | 0 |
| Comparative Example 10 | O | X | 0 |
| Comparative Example 11 | O | O | 0.65 |
| Comparative Example 12 | X | O | 1.31 |
| Comparative Example 13 | X | O | 2.08 |

In the case of the positive electrode active material according to Comparative Example 8, since the content of PVDF mixed with the intermediate product was excessively low, a peak corresponding to unreacted PVDF was not observed in the XPS analysis results. However, since the F1s peak appeared with a very weak intensity, the I(F1s)/I(C1s) ratio converged to 0.

In the case of the positive electrode active material according to Comparative Example 9, since the content of PVDF mixed with the intermediate product was excessively high and most of it remained as unreacted PVDF, a peak specific to PVDF appeared in the region of greater than 686 eV and less than 689 eV. In addition, an excessive amount of unreacted PVDF was present, and also, as can be seen from the residual lithium analysis results of Experimental Example 4, the content of residual lithium (Li₂CO₃) was excessively high, and despite the presence of the F1s peak, I(C1s) was excessively large, causing the I(F1s)/I(C1s) ratio to converge to 0.

In the case of the positive electrode active material according to Comparative Example 10, it can be seen that since the heat treatment temperature after mixing with PVDF was excessively low, the conversion of lithium impurities to LiF hardly occurred, and the F1s peak was not observed in the XPS analysis results.

Similarly, in the case of the positive electrode active material according to Comparative Example 11, since the heat treatment temperature after mixing with PVDF was low, only some of the PVDF mixed with the intermediate product reacted with lithium impurities and was converted to LiF. As a result, a peak corresponding to unreacted PVDF was observed in the XPS analysis results, and the intensity of the F1s peak was low, and thus it can be seen that the I(F1s)/I(C1s) ratio had a value of less than 1.0.

### Experimental Example 3. Evaluation of electrochemical properties of positive electrode active material

For the lithium secondary batteries (half-cells) manufactured in Preparation Example 2, charge/discharge experiments were conducted using an electrochemical analyzer (Toscat-3100 from TOYO SYSTEM CO., LTD.) at 25 °C, a voltage range of 3.0 V to 4.4 V, and a discharge rate of 0.1 C to measure the initial charge capacity, initial discharge capacity, and initial efficiency.

After performing 50 charge/discharge cycles on the same lithium secondary batteries (half-cells) using an electrochemical analyzer (Toscat-3100 from TOYO SYSTEM CO., LTD.) under the conditions of 25 °C, a voltage range of 3.0 V to 4.4 V, and 1 C/1 C, the ratio of the discharge capacity at the 50^{th} cycle to the initial capacity (cycle capacity retention) was measured.

The measurement results are shown in Table 3 below.

**[Table 3]**

| Classification | Initial charge capacity (mAh/g) | Initial discharge capacity (mAh/g) | Initial efficiency (%) | 0.1 C C-rate efficiency (%) | 50^{th} cycle capacity retention (%) |
|---|---|---|---|---|---|
| Example 1 | 222.0 | 197.2 | 88.8 | 75.4 | 94.4 |
| Example 2 | 223.4 | 197.3 | 88.3 | 74.5 | 93.5 |
| Example 3 | 221.9 | 195.7 | 88.2 | 74.5 | 93.9 |
| Example 4 | 222.2 | 195.2 | 87.8 | 75.2 | 93.9 |
| Example 5 | 223.6 | 196.8 | 88.0 | 75.2 | 95.8 |
| Example 6 | 221.8 | 205.6 | 92.7 | 75.9 | 98.3 |
| Comparative Example 1 | 220.0 | 192.9 | 87.7 | 73.7 | 89.4 |
| Comparative Example 2 | 221.0 | 193.1 | 87.4 | 72.6 | 88.4 |
| Comparative Example 3 | 220.5 | 194.3 | 88.1 | 73.4 | 89.6 |
| Comparative Example 4 | 220.4 | 194.0 | 88.0 | 73.6 | 90.0 |
| Comparative Example 5 | 221.1 | 194.2 | 87.8 | 74.1 | 89.7 |
| Comparative Example 6 | 222.2 | 194.3 | 87.4 | 74.0 | 89.1 |
| Comparative Example 7 | 221.3 | 194.1 | 87.7 | 73.8 | 88.8 |
| Comparative Example 8 | 222.5 | 194.8 | 87.6 | 74.3 | 90.8 |
| Comparative Example 9 | 168.4 | 115.6 | 68.7 | 35.1 | 41.2 |
| Comparative Example 10 | 220.1 | 192.5 | 87.5 | 73.1 | 88.6 |
| Comparative Example 11 | 220.6 | 194.3 | 88.1 | 73.3 | 90.3 |
| Comparative Example 12 | 218.5 | 196.3 | 89.8 | 68.0 | 95.3 |
| Comparative Example 13 | 221.5 | 195.6 | 88.3 | 72.3 | 89.3 |

Referring to the results in Table 3, it can be seen that the lithium secondary batteries using the positive electrode active materials according to Examples 1 to 6 exhibit improved electrochemical properties such as capacity characteristics, rate characteristics, and capacity retention.

### Experimental Example 4. Analysis of residual lithium in positive electrode active material

The analysis of the residual lithium (lithium impurities) content in each positive electrode active material prepared according to Preparation Example 1 was performed by pH titration. The pH titration method determines the residual lithium (lithium impurities) content by measuring the amount of 0.1 M HCI required to reach pH 4 during titration of the positive electrode active material. Specifically, 5 g of each positive electrode active material prepared according to Preparation Example 1 was added to 100 mL of DIW, stirred for 15 minutes, and filtered. Afterward, 50 mL of the filtered solution was taken, and 0.1 M HCI was added thereto, and the amount of HCI consumed as the pH changed was measured to calculate the content of LiOH and Li₂CO₃.

The measurement results are shown in Table 4 below.

**[Table 4]**

| Classification | LiOH (ppm) | LiCO₃ (ppm) | Sum (ppm) |
|---|---|---|---|
| Example 1 | 1,786 | 1,574 | 3,361 |
| Example 2 | 1,986 | 1,664 | 3,650 |
| Example 3 | 2,341 | 1,992 | 4,333 |
| Example 4 | 2,583 | 2,115 | 4,698 |
| Example 5 | 2,622 | 1,761 | 4,383 |
| Example 6 | 4,049 | 1,444 | 5,493 |
| Comparative Example 1 | 3,250 | 4,242 | 7,492 |
| Comparative Example 2 | 2,391 | 3,398 | 5,790 |
| Comparative Example 3 | 2,214 | 3,505 | 5,720 |
| Comparative Example 4 | 2,046 | 3,927 | 5,973 |
| Comparative Example 5 | 2,203 | 3,246 | 5,449 |
| Comparative Example 6 | 2,277 | 3,238 | 5,516 |
| Comparative Example 7 | 2,060 | 2,813 | 4,873 |
| Comparative Example 8 | 2,017 | 3,368 | 5,385 |
| Comparative Example 9 | 565 | 15,201 | 15,766 |
| Comparative Example 10 | 2,697 | 2,857 | 5,554 |
| Comparative Example 11 | 2,314 | 2,863 | 5,177 |
| Comparative Example 12 | 4,154 | 4,530 | 8,684 |
| Comparative Example 13 | 1,230 | 946 | 2,176 |

Referring to the results in Table 4, in the case of the positive electrode active materials according to Examples 1 to 6, it can be seen that the content of lithium impurities such as LiOH, Li₂CO₃, etc. remaining on the surface of the positive electrode active material was reduced (5,500 ppm or less) compared to Comparative Example 1 through surface modification, even without a washing process for reducing the content of lithium impurities. In particular, in the case of the positive electrode active materials according to Examples 1 to 6, it can be seen that the amount of Li₂CO₃ among the lithium impurities was greatly reduced.

In addition, it can be seen that the positive electrode active materials according to Examples 1 to 6 exhibit more improved electrochemical properties, as confirmed through Experimental Example 3, despite having similar residual lithium contents to Comparative Examples 2, 5, 6, 7, 8, 10, 11, and 13.

Although embodiments of the present invention have been described above, those skilled in the art can make various modifications and changes to the present invention by adding, changing, or deleting components without departing from the spirit of the present invention as set forth in the claims, which will be included within the scope of rights of the present invention.

## Claims

1. A positive electrode active material comprising:
a core portion including a lithium composite oxide capable of reversible intercalation/deintercalation of lithium ions; and
a shell portion present on at least a portion of the surface of the core portion and including fluorine,
wherein the lithium composite oxide has a crystallite size of 40 nm or more and 130 nm or less, and in XPS analysis of the positive electrode active material, no peak is observed in a region of greater than 686 eV and less than 689 eV, and an F1s peak is observed in a region of 684 eV or more and 686 eV or less.

2. The positive electrode active material of claim 1, wherein the ratio I(F1s)/I(C1s), as determined from XPS analysis of the positive electrode active material, is 1.0 to 2.5, where I(F1s) is the intensity of the F1s peak observed in the region of 684 eV or more and 686 eV or less, and I(C1s) is the intensity of the C1s peak due to C=O bonding observed in the region of 288 eV or more and 292 eV or less.

3. The positive electrode active material of claim 1, wherein the lithium composite oxide includes at least one transition metal selected from nickel, cobalt, manganese, and aluminum.

4. The positive electrode active material of claim 1, wherein the lithium composite oxide is represented by Chemical Formula 1 below,
[Chemical Formula 1] LiₐNi_{1-(b+c+d)}CO_{b}M1_{c}M2_{d}O₂₋ₑXₑ
(wherein
M1 is at least one selected from Mn and Al,
M2 is at least one selected from Na, K, Mg, Ca, Ba, Mn, B, Ce, Hf, Ta, Cr, F, Al, V, Ti, Fe, Zr, Zn, Si, Y, Nb, Ga, Sn, Mo, W, P, Sr, Ge, Nd, Gd, and Cu,
M1 and M2 are not the same,
X is at least one anionic element selected from F, P, S, Cl, and Br, and
0.5≤a≤1.5, 0≤b≤0.20, 0≤c≤0.30, 0≤d≤0.10, and 0≤e≤0.10).

5. The positive electrode active material of claim 4, wherein the mole fraction of nickel among all elements except lithium in the lithium composite oxide is 60% or more.

6. The positive electrode active material of claim 1, wherein the lithium composite oxide is represented by Chemical Formula 2 below,
[Chemical Formula 2] Li_{a'}Ni_{1-(b'+d')}Mn_{b'}M2_{d'}Q_{2-e'}X_{e'}
(wherein
M2 is at least one selected from Na, K, Mg, Ca, Ba, B, Ce, Hf, Ta, Cr, F, Al, V, Ti, Fe, Zr, Zn, Si, Y, Nb, Ga, Sn, Mo, W, P, Sr, Ge, Nd, Gd, and Cu,
X is at least one anionic element selected from F, P, S, Cl, and Br, and
0.95≤a'≤1.05, 0<b'≤0.5, 0≤d'≤0.10, and 0≤e'≤0.10).

7. The positive electrode active material of claim 6, wherein the mole fraction of nickel among all elements except lithium in the lithium composite oxide is 60% or more and 95% or less.

8. The positive electrode active material of claim 1, wherein the shell portion includes LiF.

9. The positive electrode active material of claim 1, wherein the lithium composite oxide is present as secondary particles in which a plurality of primary particles are aggregated, and the shell portion is present on at least a portion of the surfaces of the primary particles and grain boundaries between adjacent primary particles.

10. The positive electrode active material of claim 9, wherein the weight ratio F/Ni of fluorine to nickel present in the grain boundary between adjacent primary particles is 0.02 to 0.05.

11. The positive electrode active material of claim 1, wherein the fluorine content determined by IC analysis of the positive electrode active material is 0.1 wt% to 0.5 wt%.

12. The positive electrode active material of claim 1, wherein the thickness of the shell portion is 1 nm or more and 50 nm or less.

13. The positive electrode active material of claim 1, wherein the total content of LiOH and Li₂CO₃ in the positive electrode active material is 5,500 ppm or less.

14. A positive electrode comprising the positive electrode active material according to any one of claims 1 to 13.

15. A lithium secondary battery using the positive electrode according to claim 14.
